# EUROPEAN PATENT APPLICATION

(11) **EP 4 099 246 A1**
(43) Date of publication of application: **07.12.2022**
(21) Application number: 21461547.8
(22) Date of filing: 31.05.2021
(51) Int. Cl.: G06Q 20/00

(54) **A SYSTEM AND METHOD FOR TRADING CRYPTOCURRENCIES, TOKENIZED ASSETS AND/OR FIAT CURRENCIES ON A SINGLE DISTRIBUTED LEDGER SYSTEM WITH MULTIPLE ISSUING INSTITUTIONS**

(71) Applicant: Billon Sp. z o.o., 00-021 Warszawa (PL)
(72) Inventor: HOROSZCZAK, Andrzej, Warszawa (PL); KALUZA, Robert, Warszawa (PL); NISKI, Tomasz, Warszawa (PL); CZERWINSKI, Remigiusz, Warszawa (PL)
(74) Representative: Kancelaria Eupatent.pl Sp. z.o.o

(57) **Abstract**

A method for enabling trade of cryptocurrencies, tokenized assets and/or fiat currencies on a single distributed ledger system (100) comprising a plurality of nodes (110, 120, 130), wherein: at least some of the nodes are minting nodes (110); at least some of the nodes are user nodes (120); and at least some of the nodes are supervisory nodes (130). The method comprises, at the supervisory nodes (130): creating (402) user certificates (300) for users after successful verification that a user complies with predefined regulations; at the minting nodes (110): minting (413) digital assets (500), each minted digital asset comprising data on an asset type (502), an asset value (503) and a first owner (508), wherein the first owner (508) is a user having a user certificate; at the user nodes (120) operated by users having user certificates created by the supervisory nodes (130): requesting (701) or accepting (702) an exchange transaction to exchange digital assets with another user.

## Description

### COPYRIGHT NOTICE

A portion of the disclosure of this patent document contains material to which a claim for copyright is made. The copyright owner has no objection to the facsimile reproduction by anyone of the patent document or the patent disclosure, as it appears in the Patent and Trademark Office patent file or records, but reserves all other copyright rights whatsoever.

### FIELD OF THE INVENTION

The present invention relates to distributed ledger technology (DLT), in particular to a method and system that allows trading different cryptocurrencies on a single distributed ledger system.

### BACKGROUND

Advanced in blockchain and distributed ledger technology (DLT) resulted in development of various cryptocurrencies (also called cryptoassets or altcoins), such as Bitcoin, Ethereum, Litecoin etc.

Current standard systems allow to trade one type of the cryptoassets.

There are known cryptocurrency exchange systems where users can trade cryptocurrencies for other assets, such as conventional fiat money or other electronic currencies. However, the exchange systems known so far have a number of limitations.

In a typical cryptocurrency exchange system, the assets are guaranteed by the owner of the exchange system, which is usually not a trusted institution that is regulated by state laws, therefore such system poses an increased financial risk to its users.

Existing blockchain cryptographic algorithms utilizing mining concepts based on proof-of-work or proof-of-stake concepts used by cryptocurrencies have significant scalability and throughput issues. Distributed systems for traditional cryptocurrencies are significantly slower than traditional financial systems based on fiat money, which limits the volume of cryptocurrency transactions that can be processed at the same time. This limits a wide adoption of such systems.

Moreover, cryptocurrency DLT systems typically do not allow for implementation of main regulatory controls such as Anti Money Laundering (AML) or Know Your Customers (KYC) regulations.

Importantly, asset creation in traditional cryptocurrency blockchain systems is based on mining algorithms that require a significant amount of computing power and/or data storage requirements which requires huge electricity consumption and creates a negative world-wide impact on the environment.

### SUMMARY OF THE INVENTION

There is a need to provide a method and system to allow trading different cryptocurrencies on a single distributed ledger system that would solve at least some of the problems mentioned in the background section.

In one aspect, the invention relates to a method for enabling trade of cryptocurrencies, tokenized assets and/or fiat currencies on a single distributed ledger system comprising a plurality of nodes. At least some of the nodes are minting nodes, at least some of the nodes are user nodes and at least some of the nodes are supervisory nodes. The method comprises, at the supervisory nodes, creating user certificates for users after successful verification that a user complies with predefined regulations. The method further comprises, at the minting nodes, minting digital assets, each minted digital asset comprising data on an asset type, an asset value and a first owner, wherein the first owner is a user having a user certificate. The method further comprises, at the user nodes operated by users having user certificates created by the supervisory nodes : requesting or accepting an exchange transaction to exchange digital assets with another user; checking if the exchange transaction can be performed; confirming that the transaction can be performed; amending the transferred digital assets by signing the transferred digital assets with user's private key as the previous owner signature; and amending the received digital assets by adding information that the user is the current owner and signing the received digital assets with user's private key as the current owner signature.

The system can be used only by users that have been positively verified as compliant with predefined regulations. The verification is performed by minting nodes, which are also authorized to mint digital assets for further use within the system. Therefore, the overall trust level to the system is dependent on the trust level of the entities that operate the minting nodes. Therefore, the system can be designed to allow only reputable entities, such as trusted financial institutions, to operate as the minting nodes, which provides high level of security to the users of the system.

Another advantage of the system is that multiple reputable entities can operate as the minting nodes that issue digital assets, therefore the system provides interoperability between these different entities (the need for exchanges to switch from one issuer system to another issuer system is eliminated). This facilitates faster market adoption as users of multiple institutions add-up to strengthen network effect. In addition, fast and efficient atomic swap operations can be implemented.

The digital assets that are available for trade (including exchange) in the system are minted by the trusted minting nodes. The digital assets store information about their complete history, including the initial owner and the consecutive owners. Therefore, each digital asset can be verified for its history of transaction and the transaction security level is high.

The minting node can be operated by a trusted entity that satisfies system-defined regulatory requirements.

The supervisory node can be operated by a trusted entity that satisfies system-defined regulatory requirements. Thereby, the users can easily verify the security of the system by checking which types of entities can operate as the supervisory nodes and the minting nodes that are responsible for introduction of users into the system and minting of digital assets.

The minting node and the supervisory node can be integrated within a single minting and supervisory node.

The method may comprise minting digital assets at the minting node upon receiving a notification of deposit of funds or cryptocurrency or certificate of an asset by a user to the entity that governs the minting node. This way, the total amount of digital assets that is in the system is covered by the deposits of fiat currencies or cryptocurrencies or asset certificates held by the entities that govern the minting nodes.

Verification of a user at the supervisory node may include performing Know Your Customer and/or Anti Money Laundering procedures. This way all users may be ascertained that the other users with whom they trade within the systems are compliant with the regulatory regulations.

Checking if the exchange transaction can be performed may include checking if the other user has enough digital assets. This limits the risk of a trade for unbalanced digital assets.

Checking if the exchange transaction can be performed may include checking if the other user has available transaction in/out limits. This limits the risk of performing a trade transaction that would not be compliant with AML rules.

The method may further comprise providing information on user wallet after completion of the exchange transaction and distributing user wallet information to the distributed ledger system. Providing user wallet information allows for quick verification of user account before performing next transaction. The user wallet information can be at any time verified by any other user by monitoring the transactions history available at the digital assets data.

The distributed ledger system can be based on a blockchain and the information on digital assets and user wallets is stored as sidechains. This allows efficient exchange of information between the nodes.

In another aspect, the invention relates to a computer system comprising: at least one nontransitory processor-readable storage medium that stores at least one of processor-executable instructions or data; and at least one processor communicably coupled to the at least one nontransitory processor-readable storage medium, wherein the at least one processor is configured to perform the steps of the methods as described herein, corresponding to the functionality of the minting node, the supervisory node, the minting and supervisory node or of the user node.

In another aspect, the invention relates to a computer program product comprising instructions which, when executed on a computer, cause the computer configured as the minting node, the supervisory node, the minting and supervisory node or as the user node to perform the corresponding steps of the methods as described herein.

### BRIEF DESCRIPTION OF THE DRAWINGS

Embodiments of the present disclosure are best understood from the following detailed description of exemplary embodiments when read in conjunction with the accompanying drawings. Included in the drawings are the following Figures:
Fig. 1 illustrates a structure of the system in which the present method can be implemented;
Fig. 2A illustrates a functional architecture of a supervisory node;
Fig. 2B illustrates a functional architecture of a minting node;
Fig. 2C illustrates a functional architecture of a minting and supervisory node;
Fig. 3 illustrates an individual user certificate;
Fig. 4A illustrates a procedure for creating a user certificate;
Fig. 4B illustrates a procedure for minting a new digital asset;
Fig. 5 illustrates a digital asset structure;
Fig. 6 illustrates user wallet data structure;
Fig. 7 illustrates a flowchart of an exchange transaction process;
Fig. 8 illustrates an example of changes in sidechains;
Fig. 9 illustrates an example of a computer system.

### DETAILED DESCRIPTION OF EMBODIMENTS

Reference will now be made in detail to the embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well known methods, procedures, and components have not been described in detail as not to unnecessarily obscure aspects of the present invention.

The present disclosure is to be considered as an exemplification of the invention, and is not intended to limit the invention to the specific embodiments illustrated by the Figures or description below.

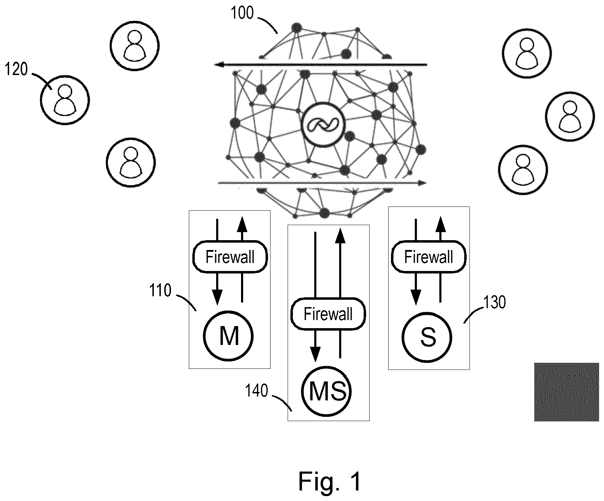

Fig. 1 illustrates a structure of the system in which the present method can be implemented. The system 100 is a distributed ledger system 100 that comprises a plurality of nodes which as a collective provide an immutable record of the legger transactions. The distributed ledger system 100 can be implemented using blockchain technology.

There are at least two types of nodes within the system: minting nodes 110 and user nodes 120.

In general, the nodes are implemented by a software application executed on a computer device, such as a server computer, a personal computer, a smartphone, a network computing device (such as a router) or any IOT (Intemet-of-Things) device that is connected to a computer network (such as the Internet) and has an address (such as an IP address). The computer device may be operated by one of several known operating systems, such as Windows, Linux, iOS, Android etc. Apart from providing the node-specific functionality as described below for particular node types, every node supports the system 100 by maintaining a partial copy of blockchain data. Therefore, the nodes 110, 120, 130, 140 are individual parts of the larger structure, namely a DLT network system 100.

The user node 120 can be implemented by installing a software application on a user device (such as a personal computer or a smartphone) that allows the user to connect to the system 100 and provides an interface for the user to perform transactions within the system 100, including exchange transactions, with other nodes of the system. The user nodes 120 are created for users that have been approved by the supervisory nodes 130, in particular users that have successfully completed regulatory authorizations, such as the Know Your Customer (KYC) process at the supervisory node 130 and have received an individual user certificate. The user nodes 120 allow the user to handle minted digital assets and to transact with other nodes 110, 120, 140 without involvement of the trusted institution that authorized the user node 120. Each transaction is approved (validated) by user nodes 110, however only the transaction parties can read private data associated with the transaction.

The user nodes 120 may access the system 100 via public network, such as the Internet.

The minting nodes 110 and supervisory nodes 130 are a special type of a node controlled by a trusted entity. For example, the trusted entity can be a bank or other financial institution whose operation is regulated by state banking laws or any other law defining regulations for other financial institutions. In general, the system 100 policy may define the minimum requirements for an entity to be regarded as a trusted entity, so that the users know exactly what type of entities guarantee safety of assets within the system. For example, the system policy may be defined such that it is compliant with regulations of a state wherein the system is implemented or where the users of the system reside (for example, with European Union regulations). The minting nodes and supervisory nodes can be implemented by installing a software system at a trusted entity infrastructure (such as one or more server computers).

The minting node 110 allows to mint new digital assets in the system. The minting node 110 is linked to cryptocurrency blockchain wallets at external systems, such as Bitcoin, Ethereum, Litecoin etc. When a new cryptocurrency is added by a user to the cryptowallet 119 or new money arrive on fiat bank account 118 linked via API to the minting node 110 or an asset certificate is deposited to the trusted institution, a new digital asset is minted on the system 100 and delivered to the individual user's node 120. The minting nodes 110 can be linked to multiple cryptocurrency wallets and fiat bank accounts, therefore they are capable of minting multiple digital asset types (this provides full interoperability and exchangeability of different cryptocurrencies). Therefore, the fiat bank accounts 118 and cryptowallets 119 play the role of the store of value for digital assets minted by the minting nodes 120 into the system 100.

Each minting node 110 has a plurality of cryptographic key pairs (public key and private key). First, the minting node 110 has a main key pair that identifies the minting node 110. Moreover, the minting node 110 has individual asset key pairs, one for each digital asset type that can be minted by that minting node 110. All the public keys of the minting nodes 110 are widely distributed between the users of the system, so that each user knows all the public keys and uses them to validate the digital assets within the system.

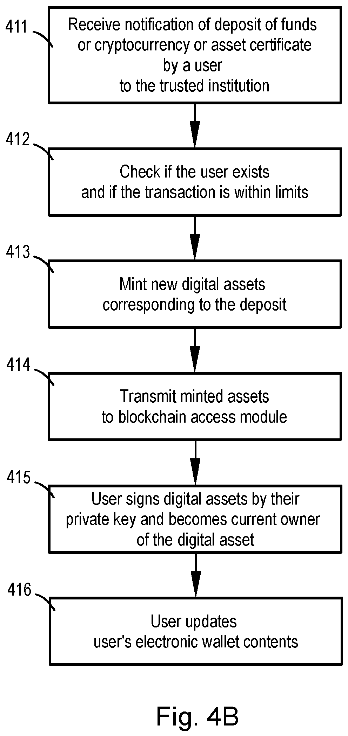

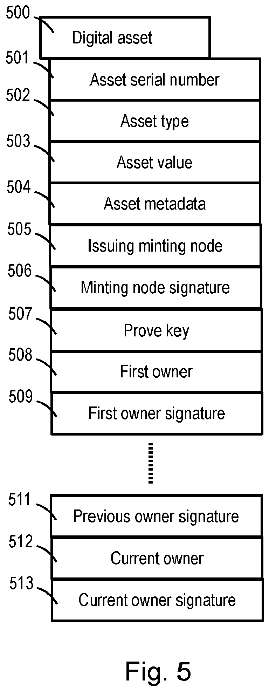

The minting nodes 110 are privileged nodes of the system 100 that have the ability to mint digital assets for use within the system, as described with reference to Fig. 4B - thus, the minting nodes 110 perform a minting (issuing) process that includes minting new digital assets having a structure shown in Fig. 5. All of the minting node activities are recorded on DLT. Therefore, an important role of the minting node 110 is to control the supply of assets to the system. The minting node 110 is supposed to mint digital assets only in case when that minting node 110 can cover the digital asset by storing the equivalent in cryptowallets 119 or fiat bank accounts 118. Therefore, the system trust is anchored by trust to the organization operating that the minting nodes 110 are being operated according to system policy. However, all the trading operations of the system are trust-less, that is all of the subsequent peer-to-peer transactions between user nodes avoid any usage of a trusted-third-party. Moreover, since all minting and redemption activities of the minting nodes are public, visible and immutable, there is little incentive for the trusted organization to misbehave, as any audit will easily pinpoint any current or historical discrepancies between ledger published data and the balance of fiat funds actually held by the organization, or record of tokenized asset held in trust by the organization. Additionally, the minting nodes 110 play a crucial role to allow the system 100 to comply with regulatory requirements as the responsible party for instance as Electronic Money Institution (for fiat currencies) or as REIT (for real estate assets), etc.

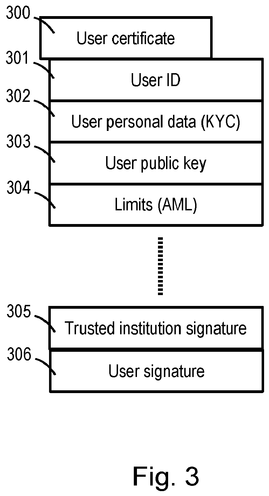

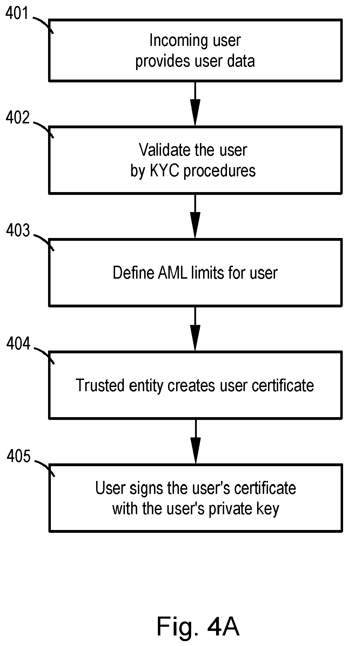

The supervisory nodes 130 are responsible for creating new user certificates as described with reference to Figs. 3 and 4A.

The minting nodes 111 may connect to the DLT system 100 via firewalls 111 in order to increase system security, in particular to limit unauthorized access to the minting nodes 111.

In addition, the functionality of the minting nodes 110 and the supervisory nodes 130 can be integrated into a minting and supervisory node 140.

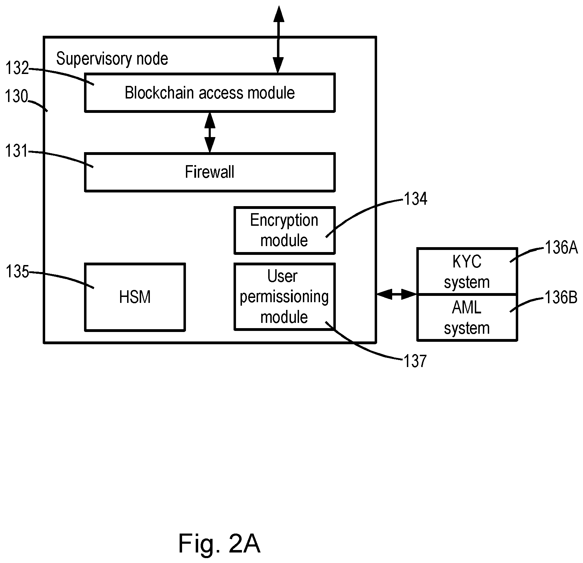

Fig. 2A illustrates functional architecture of a supervisory node 130. It comprises the following modules.

A blockchain access module 132 is configured to communicate with the system 100 via the firewall 131 to issue user certificates (as shown in Fig. 3) during registration of a new user in the system.

The encryption module 134 is an application that can be installed within a data center of the trusted entity. It operates in combination with a hardware security module (HSM) 135.

The supervisory node 130 is connected with regulatory compliance systems, such as a Know Your Customer (KYC) system 136A and Anti-Money Laundering (AML) system 136B that verify customers handled by that node, in particular new customers for which that node creates new accounts in the system, according to state regulations. Therefore, by allowing each supervisory node to create and handle accounts only for users that comply with the regulatory requirements, the whole system is compliant with the regulatory requirements. For example, the supervisory node 130, via the AML system, may check transaction limits for a particular user, verify that the user has no flags attached in other systems, verify if the user is a public person, etc. When the user account is created, the supervisory node 130 defines the transaction limits depending on the outcome of the AML system check.

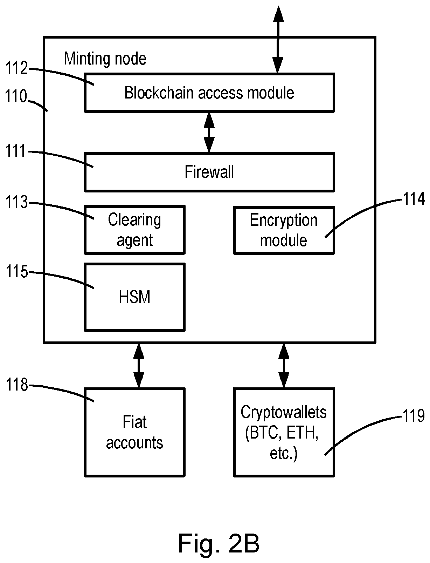

Fig. 2B illustrates functional architecture of a minting node 110. It comprises the following modules.

A blockchain access module 112 is configured to communicate with other nodes of the system 100, in particular the user nodes 120 by means of the blockchain access module 112 via the firewall 111. This includes finding users, delivering funds (encrypted digital assets issued by the encryption module 114 to the end user) and terminating digital assets (collecting digital assets from user nodes 120 and sending it for termination by a clearing agent 113). A combination of the minting and termination procedures allows to adjust the system to supply and demand forces without the financial risk associated with run on the currency. Additionally, the blockchain access module 112 is configured to sign newly minted digital assets and to verify the correctness of digital assets during termination, as will be described in details below.

The encryption module 114 is an application that can be installed within a data center of the trusted entity. It operates in combination with a hardware security module (HSM) 115. It generates a genesis block for each digital asset subchain and marks the initial ownership of the digital asset by the particular minting node 110. Therefore, this module is configured to, based on information received from the core financial system of the trusted entity, issue new digital assets to the system. Fig. 4B illustrates a procedure for minting a new digital asset.

A clearing agent 113 module is configured to provide functionality of transferring funds outside the system, to external user accounts, either fiat currency (such as USD, EUR, etc.) bank accounts 118 or cryptowallets (such as BTC, ETH, etc.). During redemption of funds, the clearing agent 113 verifies each digital asset that is to be cleared. It also cooperates with the regulatory compliance systems e.g. to verify current user limits via the AML system 136B.

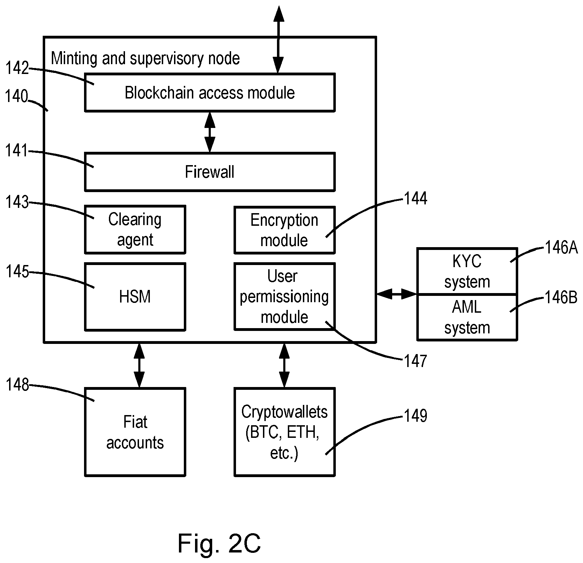

Fig. 2C illustrates a functional architecture of a minting and supervisory node 140 that combines the functionality of the minting node and the supervisory node. It comprises the following modules.

A blockchain access module 142 is configured to communicate between the minting and supervisory node 140 and other nodes of the system 100, in particular the user nodes 120 by means of the blockchain access module 142 via the firewall 141. This includes finding users, delivering funds (encrypted digital assets issued by the encryption module 144 to the end user) and terminating digital assets (collecting digital assets from user nodes 120 and sending it for termination by a clearing agent 143). A combination of the minting and termination procedures allows to adjust the system to supply and demand forces without the financial risk associated with run on the currency.

Additionally, the blockchain access module 142 is configured to issue user certificates (as shown in Fig. 3) during registration of a new user in the system, to sign newly minted digital assets and to verify the correctness of digital assets during termination, as will be described in details below.

The encryption module 144 is an application that can be installed within a data center of the trusted entity. It operates in combination with a hardware security module (HSM) 145. It generates a genesis block for each digital asset subchain and marks the initial ownership of the digital asset by the particular minting and supervisory node 140. Therefore, this module is configured to, based on information received from the core financial system of the trusted entity, issue new digital assets to the system. Fig. 4B illustrates a procedure for minting a new digital asset.

The minting and supervisory node 140 is connected with regulatory compliance systems, such as a Know Your Customer (KYC) system 146A and Anti-Money Laundering (AML) system 146B that verify customers handled by that node, in particular new customers for which that node creates new accounts in the system, according to state regulations. Therefore, by allowing each minting and supervisory node to create and handle accounts only for users that comply with the regulatory requirements, the whole system is compliant with the regulatory requirements. For example, the minting and supervisory node 140, via the AML system, may check transaction limits for a particular user, verify that the user has no flags attached in other systems, verify if the user is a public person, etc. When the user account is created, the minting and supervisory node 140 defines the transaction limits depending on the outcome of the AML system check.

A clearing agent 143 module is configured to provide functionality of transferring funds outside the system, to external user accounts, either fiat currency (such as USD, EUR, etc.) bank accounts 148 or cryptowallets (such as BTC, ETH, etc.). During redemption of funds, the clearing agent 143 verifies each digital asset that is to be cleared. It also cooperates with the regulatory compliance systems e.g. to verify current user limits via the AML system 146B.

Fig. 3 illustrates an individual user certificate. The certificate is created by the trusted institution when a new user enters the system and after successful verification of the user via the regulatory compliance systems 136A, 136B. The user certificate 300 comprises a plurality of fields, including: a user identifier 301, unique reference to user personal data 302 (such as required by the KYC regulations and other needs of the system, for example user name, address, personal identifier, tax identifier, contact information etc., wherein the actual data may be stored in an external location such that it is not freely available to any party that accesses the certificate), user public key 303, user limits 304 (such as required by the AML regulations and other needs of the system, such as a total transaction limit, single transaction limit, daily transactions limit etc.), trusted institution signature 305 (i.e. the signature of the trusted entity that has introduced the particular user to the system and created the user's certificate) and user signature 306. The user certificate 300 may contain further user data, such as user hashes. The user certificate may be stored in the blockchain system 100, wherein its logical genesis block is generated by the supervisory node 130 that created the user and further logical blocks may be added upon change of user data by the same supervisory node 110 or other supervisory nodes 130 that are authorized to alter user data.

Fig. 4A illustrates a method for creating a user certificate (as shown in Fig. 3) when a new user is to join the system. First, in step 401 the user provides identification details as required by the supervisory node 130 to create the user account (for example, details that allow to perform the KYC procedures and gather other essential user data). In step 402 the trusted entity performs the user validation via KYC procedures. If the user is successfully validated, then the trusted entity performs AML check in order to define transaction limits. In step 404 the user certificate is created by the trusted entity by inputting the data related to user ID 301, user personal data 302, user limits 304 and trusted institution signature 305. In step 405 the user signs the certificate by the user's private key 306.

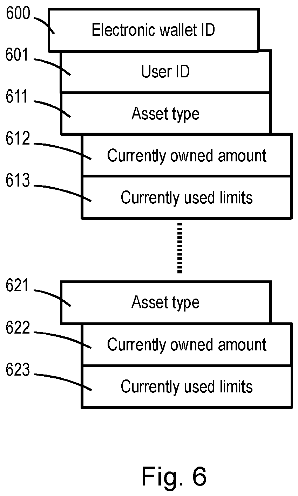

Fig. 4B illustrates a method for minting (in other words, issuing) a digital asset certificate (DLT attestation), the structure of which is shown in Fig. 5. The digital asset certificates are minted by the minting nodes 110 based on off-the-distributed-ledger assets that the minting node 110 (run by a trusted entity) can cover, for example by storing corresponding fiat or cryptocurrency at user fiat bank accounts 118 or cryptowallets 119 or legally recognized certificates of a physical or an intellectual asset. The procedure is initiated in step 411 when fiat funds, cryptocurrency or asset certificate is deposited by the user to an internal fiat bank account 118 or cryptowallet 119. Next, in step 412 the trusted entity checks whether that user exists and whether the deposited funds are within the user transaction limits, for example by using systems such as KYC system 136A and the AML system 136B. Upon successful validation, in step 413 new digital assets are minted in amount that corresponds to the amount of funds deposited by the user. In step 414 the minting node 110 signs the digital asset by the private key of the minting node in field 506, to certify that step 411 was made under the authorization of the trusted institution that operates the minting node. Next, in step 414 the digital assets, each with a globally unique identifier, are transmitted to the blockchain as sidechains. In step 415 the user checks verifies the signatures on the digital asset that have been applied by the minting node and if correct, the user signs the digital assets ownership change message by signing them with user's private key to become the current owner of the digital asset. Next, user wallet data (as shown in Fig. 6) are updated in step 416, for example by the user entering the amount and identifier of digital assets just received to the wallet data.

On the other hand, if a user wishes to redeem the digital assets, the user may contact the minting node with a request to redeem the digital asset. The minting node checks whether all signatures on the message changing digital asset ownership to its final owner e.g. back to the minting node are correct and the message propagation has followed the DLT protocol rules. Once this is confirmed the minting node adds the corresponding amount to the user's fiat bank account 118 or external cryptowallet 119. The corresponding digital asset is then removed from the system by sending it to other cyprowallet 119 provided by the user or the money transfer is sent from the fiat bank account 118

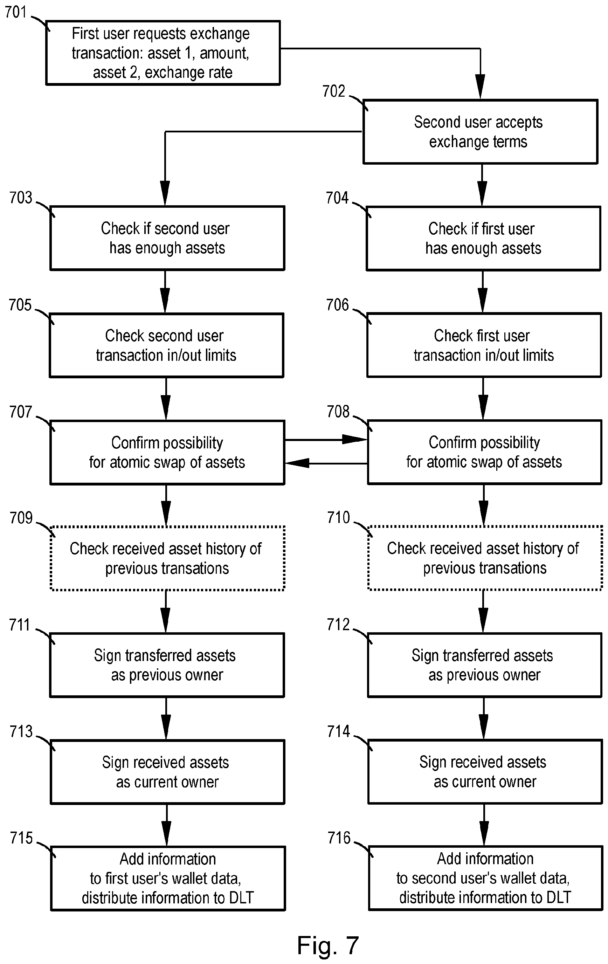

Fig. 5 illustrates a digital asset structure 500. This is stored in the blockchain system 100 in a form of a subchain comprising a genesis block created upon minting the digital asset and following blocks that are added as the digital asset changes owners. The digital asset 500 comprises an asset serial number 501 that is a unique identifier among all digital assets within the system. An asset type 502 field defines a fiat currency (USD, EUR, etc.) or a cryptocurrency (BTC, ETH, etc.) or an asset certificate to which this digital asset corresponds or another system-specified type. An asset value 503 field defines what is the unit value of that digital asset (such as one cent, one millionth of BTC, etc.). An asset metadata field 504 may define further digital asset data (such as date of issuance, validity date, business data describing the digital asset etc.). An issuing minting node field 505 defines the trusted entity that minted that digital asset and is accompanied with a signature field 506 of that trusted entity (i.e. the private key of the minting node 110 that minted the digital asset) in order to allow validation of the digital asset. Moreover, a prove key 507 of a particular digital asset can be minted, which can be a signature of the minting node that is of a different type than the first signature. For example, one of the keys 506, 507 can be a key associated with the blockchain access module 112 and the other key may be the key associated with the HSM module 115. Next, a first user is defined in field 508 accompanied by that first user's signature 509. Fields 501-509 may form the genesis block and the following fields may be defined by consecutive blocks of the sidechain corresponding to that digital asset. Only the digital asset that has at least three signatures 506, 507, 509 is a valid digital asset in the system 100. The following fields define change of ownership of the digital asset and comprise a previous owner signature 511, an identifier of the current owner 512 and a current owner signature 513. Fields 511-513 are added to the digital asset sidechain each time the digital asset is traded and its owner changes, as explained in Fig. 7.

Fig. 6 illustrates a structure of a user's electronic wallet 600, identified by a user's identifier 601. The wallet comprises one or more entries defining an asset type 611, 621 (USD, EUR, BTC, ETH, etc.), currently owned amount 612, 622 of that digital asset in the wallet and limits 613, 623 associated with that digital asset (such as total limits or daily limits already used). The contents of the electronic wallet 600 are updated by the user node 120 upon completing a transaction so that the wallet allows quick checkup of the digital assets of particular user, e.g. before entering a transaction. However, the contents of the wallet can be verified all the time by DLT system to check the data integrity and detect potential system frauds by analysis of transactions performed by that user or transactions on particular digital assets claimed in the wallet, in case a more secure checkup of the information is necessary.

Fig. 7 illustrates a flowchart of an exchange transaction process that can be executed between nodes 110, 120, 140 in the system, such as between two user nodes 120 or a user node and a minting node 110. In step 701 a first user initiates a request for an exchange transaction, by indicating the amount of the first asset type to be exchanged, the second currency to which the first asset type is to be exchanged and an exchange rate. The exchange rate may be user-defined or may be configured to be automatically generated by exchange rate service that provides current exchange rates of digital assets based on overall market data. The request may be placed on an exchange platform that may collect exchange offers from various users, such as individual users that offer one-time transactions or institutional users (such as financial institutions) that continuously offer exchange transactions. In step 702, a second user indicates an intention to accept the exchange terms and to enter into the exchange agreement. Then, both users verify each other's credibility: in steps 703, 704 they check whether the other user has enough funds in their digital assets wallet to enter into the transaction and in steps 705, 706 they check whether the other user has available in and out limits to perform the transaction. Upon positive verification, both users confirm in steps 707, 708 the possibility for atomic swap of digital assets. In steps 709, 710 the users may,, check the history of previous transactions related to the digital asset to be received, such as to accept only digital assets that have a reliable history of transactions in its subchain by verification of signatures of previous holders of that digital asset. Next, in steps 711, 712 each side of the transaction signs their digital assets to be transferred as the previous owner (in field 511) and in steps 713, 714 each side of the transaction signs their digital assets to be received as the current owner (in fields 512, 513). Next, the users update information on their digital asset wallets, by deducting the digital assets that have been transferred out and adding digital assets that have been transferred in and update the wallet data in the distributed ledger system 100 (for example, by broadcasting their wallet data subchains across the blockchain system).

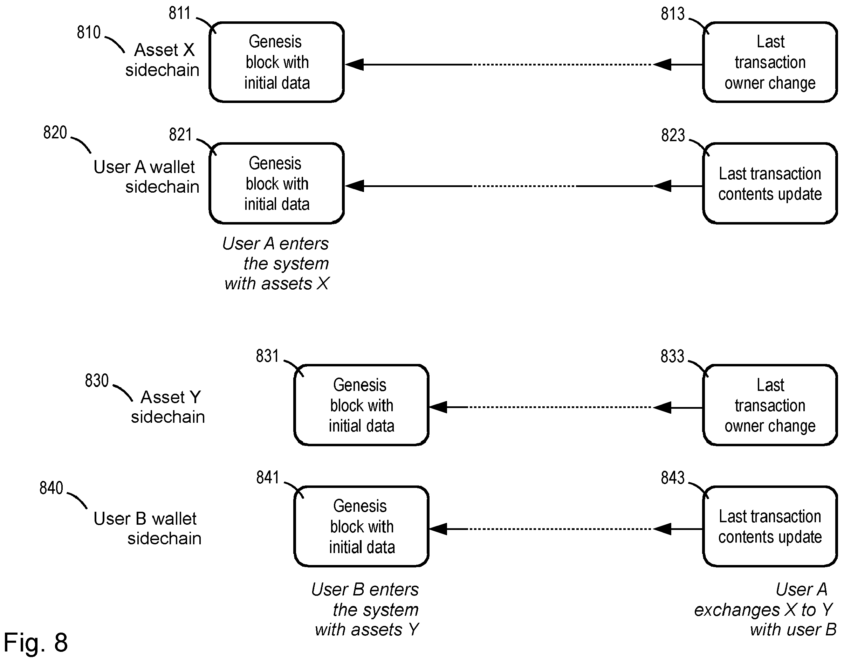

Fig. 8 illustrates an example of changes in sidechains in case when the distributed ledger system 100 is implemented in a form of blockchain comprising a plurality of sidechains. When user A joins the system, a certificate for that user is created by a supervisory node 130 in accordance with the procedure of Fig. 4A. A deposit of funds by user A at the minting node 110 results in creation of one or mode sidechains 810 for digital assets X that were deposited by user A (with genesis blocks 811 indicating the initial state of digital asset as shown in fig. 5 that indicates that user A is the initial owner of that digital asset) and a sidechain 820 with genesis block 821 for the user A wallet (as shown in Fig. 6) that indicates that the wallet contains the digital asset X (and possibly other digital assets). Similarly, sidechains for other digital assets are created by the same or other minting nodes 110, such as a sidechain 830 starting with genesis block 831 for digital asset Y and a sidechain 840 starting with genesis block 841 for user B wallet. When user A exchanges digital asset type X (corresponding to currency X) with user B for digital asset type Y (corresponding to currency Y), then upon completing the procedure of Fig. 7, the following blocks are added to the sidechain: a block 813 indicating a change of owner of digital asset X from A to B, a block 823 indicating update of contents of user A wallet, a block 833 indicating a change of owner of digital asset Y from B to A, and a block 843 indicating update of contents of user B wallet.

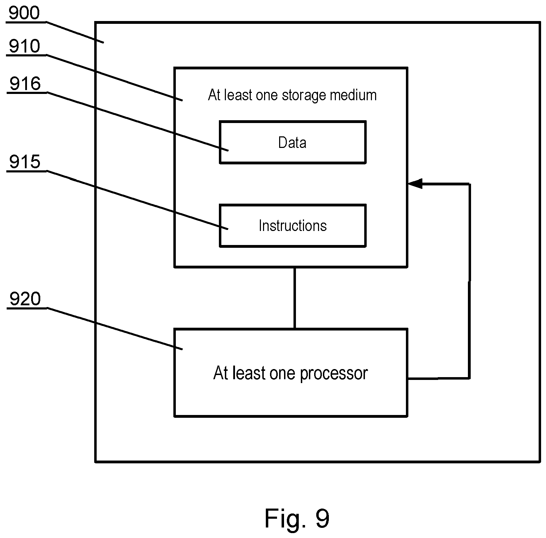

The functionality described herein can be implemented in computer systems 900, such as shown in Fig. 9. These computer systems may function to operate the minting node 110, the supervisory node 130, the minting and supervisory node 140 or the user node 120. They may be implemented as single machines or a plurality of machines connected over a network. An example computer system 900 may include at least one nontransitory processor-readable storage medium 910 that stores at least one of processor-executable instructions 915 or data 916; and at least one processor 920 communicably coupled to the at least one nontransitory processor-readable storage medium 910. The at least one processor 920 may be configured to (by executing the instructions 915) perform the methods presented herein, in particular the methods presented in Figs. 4A, 4B and 7.

While the present invention has been described in terms of particular embodiments and applications, in both summarized and detailed forms, it is not intended that these descriptions in any way limit its scope to any such embodiments and applications, and it will be understood that many substitutions, changes and variations in the described embodiments, applications and details of the method and system illustrated herein and of their operation may be made by those skilled in the art without departing from the spirit of this invention.

## Claims

1. A method for enabling trade of cryptocurrencies, tokenized assets and/or fiat currencies on a single distributed ledger system (100) comprising a plurality of nodes (110, 120, 130), wherein:
- at least some of the nodes are minting nodes (110);
- at least some of the nodes are user nodes (120); and
- at least some of the nodes are supervisory nodes (130);
the method comprising:
- at the supervisory nodes (130):
- creating (404) user certificates (300) for users after successful verification that a user complies with predefined regulations;
- at the minting nodes (110):
- minting (413) digital assets (500), each minted digital asset comprising data on an asset type (502), an asset value (503) and a first owner (508), wherein the first owner (508) is a user having a user certificate;
- at the user nodes (120) operated by users having user certificates created by the supervisory nodes (130):
- requesting (701) or accepting (702) an exchange transaction to exchange digital assets with another user;
- checking (703, 704, 705, 706) if the exchange transaction can be performed;
- confirming (707, 708) that the transaction can be performed;
- amending (711, 712) the transferred digital assets (500) by signing the transferred digital assets with user's private key as the previous owner signature (511); and
- amending (713, 714) the received digital assets (500) by adding information that the user is the current owner (512) and signing the received digital assets with user's private key as the current owner signature (513).

2. The method according to claim 1, wherein the minting node (110) is operated by a trusted entity that satisfies system-defined regulatory requirements.

3. The method according to any of previous claims, wherein the supervisory node (110) is operated by a trusted entity that satisfies system-defined regulatory requirements.

4. The method according to any of previous claims, wherein the minting node (110) and the supervisory node (130) are integrated within a single minting and supervisory node (140).

5. The method according to any of previous claims, comprising minting (403) digital assets (500) at the minting node (110) upon receiving a notification of deposit of funds or cryptocurrency or certificate of an asset by a user to the entity that governs the minting node (110).

6. The method according to any of previous claims, wherein verification (402) of a user at the supervisory node (140) includes performing Know Your Customer and/or Anti Money Laundering procedures.

7. The method according to any of previous claims, wherein checking if the exchange transaction can be performed includes checking (703, 704) if the other user has enough digital assets.

8. The method according to any of previous claims, wherein checking if the exchange transaction can be performed includes checking (705, 706) if the other user has available transaction in/out limits.

9. The method according to any of previous claims, further comprising providing (715, 716) information on user wallet (600) after completion of the exchange transaction and distributing user wallet information to the distributed ledger system (100).

10. The method according to any of previous claims, wherein the distributed ledger system is based on a blockchain and the information on digital assets and user wallets is stored as sidechains (810-840).

11. A computer system (900) comprising:
- at least one nontransitory processor-readable storage medium (910) that stores at least one of processor-executable instructions (915) or data (916); and
- at least one processor (920) communicably coupled to the at least one nontransitory processor-readable storage medium (910), wherein the at least one processor (920) is configured to perform the steps of the method of any of previous claims corresponding to the functionality of the minting node (110), the supervisory node (130), the minting and supervisory node (140) or of the user node (120).

12. A computer program product comprising instructions which, when executed on a computer, cause the computer configured as the minting node (110), the supervisory node (130), the minting and supervisory node (140) or as the user node (120) to perform the corresponding steps of the method of any of claims 1-10.
